# EUROPÄISCHE PATENTSCHRIFT

(11) **EP 1 885 588 B1**
(45) Veröffentlichungstag und Bekanntmachung des Hinweises auf die Patenterteilung: **24.12.2008**
(21) Anmeldenummer: 06724760.1
(22) Anmeldetag: 09.05.2006
(51) Int. Cl.: B60T 17/08, F16D 65/14

(54) **BREMSZYLINDER**
BRAKE CYLINDER
CYLINDRE DE FREIN

(30) Priorität: 20.05.2005 DE 102005023407
(43) Veröffentlichungstag der Anmeldung: 13.02.2008
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2006/004308
(87) Internationale Veröffentlichungsnummer: WO 2006/122674

(56) Entgegenhaltungen:
- DE-A1- 3 011 713
- DE-A1- 10 218 973
- DE-B- 1 269 426

## Beschreibung

Die Erfindung betrifft einen Bremszylinder, vorzugsweise für eine druckbeaufschlagbare Nutzfahrzeugbremse mit einem druckbeaufschlagbaren sowie federbelasteten Zylinderlaufteil, wie zum Beispiel ein Kolben, einer randseitig eingespannte Membran oder dergleichen, wobei der Bremszylinder mit einer beweglichen und mit einem Bremsgestänge koppelbaren Kolbenstange ausgestattet ist.

Dokument DE-A-30 11 713 offenbart einen Bremszylinder für eine druckbeaufschlagbare Nutzfahrzeugbremse mit einem druckbeaufschlagbaren sowie federbelasteten Zylinderlaufteil, wobei der Bremszylinder mit einer beweglichen und mit einem Bremsgestänge koppelbaren Kolbenstange ausgestattet ist.

Der Bremszylinder wird üblicherweise zur Auslösung des Bremsvorganges mit Druckluft beaufschlagt, da üblicherweise Nutzfahrzeuge mit einer Druckluftanlage ausgestattet sind. Es ist jedoch auch möglich, dass der Bremszylinder hydraulisch arbeitet, das heißt, er wird mit Drucköl beaufschlagt. Je nach der Gestaltung des Zylinderlaufteiles wird bei den Bremszylindern zwischen einem Kolben- und einem Membranzylinder unterschieden. Bei einem Kolbenzylinder wird ein Kolben und bei einem Membranzylinder eine Membran zur Auslösung eines Bremsvorganges bewegt. Bei beiden Ausführungen ist die Kolbenstange mit dem Kolben oder mit der Membran verbunden.

Bei den Nutzfahrzeugbremsen wird zwischen Scheiben- und Trommelbremsen unterschieden. Bei den Trommelbremsen werden bei Auslösung des Bremsvorganges durch den Bremszylinder segmentförmige Bremsbeläge an die Innenfläche einer Bremstrommel gedrückt. Bei Scheibenbremsen werden die Bremsbeläge bei Auslösung des Bremsvorganges an die Bremsscheibe gedrückt. Unabhängig von der Bauart der Nutzfahrzeugbremse stehen die Bremsbeläge im ungebremsten Zustand in einem relativ geringen Abstand zur Bremstrommel bzw. zur Bremsscheibe. Dieser Abstand wird als sogenanntes Lüftspiel bezeichnet.

Die Zuspann- bzw. Bremskraft während eines Bremsvorganges muss relativ hoch sein. Aufgrund dieser hohen Zuspannkräfte und der damit verbundenen Verformungen an den im Kraftfluss befindlichen Bauteilen ergeben sich Hubbewegungen der Kolbenstange eines Bremszylinders zwischen 50 und 75 mm.

Die Anforderungen an die Leistung einer Betriebsbremsanlage eines Nutzfahrzeuges werden laufend erhöht, woraus sich ergibt, dass auch die Zuspannkräfte an den Bremsen erhöht werden müssen. Daraus ergibt sich, dass auch die elastischen Verformungen der im Kraftfluss befindlichen Bauteile erhöht werden, so dass der Hub des Kolbens oder der Membran ebenfalls vergrößert wird. Durch diesen vergrößerten Hub des Kolbens bzw. der Membran ergibt sich eine größere Baulänge für den Bremszylinder.

Der Bauraum bei Nutzfahrzeugen für die Installation der Radbremsen ist jedoch limitiert. Dies gilt besonders aufgrund der Lenkkinematik für die den Vorderachsen zugeordneten Bremsen. Die auftretenden Schwierigkeiten werden auch noch durch die Einführung von konstruktiv aufwendigen Fahrwerkssystemen, wie zum Beispiel Einzelradaufhängungen, noch zusätzlich erhöht.

Der Erfindung liegt die Aufgabe zugrunde, einen Bremszylinder, vorzugsweise für eine Nutzfahrzeugbremse so auszulegen, dass bei geringstmöglichen Abmessungen durch Verringerung des Hubes des Zylinderlaufteiles die Funktion der Betriebsbremsanlage auch bei Erhöhung der Zuspannkraft sichergestellt ist.

Die gestellte Aufgabe wird gelöst, indem dem Zylinderlaufteil eine relativ dazu bewegliche Vorschalteinrichtung derart zugeordnet ist, dass diese zur Überwindung des Lüftspieles zwischen den Bremsbelägen und dem Bremskörper durch Druckbeaufschlagung relativ zum Zylinderlaufteil bewegbar ist, und dass nach Abbau des Lüftspieles das Zylinderlaufteil druckbeaufschlagbar ist, und dass beim Aufbau der Zuspannkraft die Vorschalteinrichtung der Bewegung des Zylinderlaufteiles folgt.

Bei Lösung der gestellten Aufgabe wird davon ausgegangen, dass bei der Überwindung des sogenannten Lüftspieles von dem Zylinderlaufteil des Bremszylinders nur sehr geringe Kräfte aufgebracht werden müssen, während bei Kontakt der Bremsbeläge mit dem Bremskörper die vom Zylinderlaufteil aufzubringende Kraft um ein Vielfaches erhöht werden muss. Der erfindungsgemäße Bremszylinder könnte auch als Zwei-Phasen-Bremszylinder bezeichnet werden, da nunmehr die vom Bremszylinder aufzubringende Kraft zunächst bei Auslösung eines Bremsvorganges von der Vorschalteinrichtung und danach von dem Zylinderlaufteil aufgebracht wird. Das Lüftspiel bei den Nutzfahrzeugbremsen liegt üblicherweise im Bereich von 1 mm. Bei einer mechanischen Übersetzung von 15:1 ergibt sich daraus am Bremszylinder ein Kolbenhub von 15 mm. Da in dieser Phase die Bremsbeläge nicht am Bremskörper anliegen, ist der Kraftaufwand sehr gering. Die hier wirkende Gegenkraft ergibt sich lediglich aus der Rückstellfeder im Bremszylinder und in der Radbremse sowie aus systemimmanenten Reibkräften. Zum Aufbau der Zuspannkraft ergibt sich je nach der Übersetzung ein Hub des Zylinderlaufteiles bis zu 65 mm. Das bedeutet, dass sich der gesamte Hub aus der Summe des Hubes zur Überwindung des Lüftspieles und zum Aufbau der Zuspannkraft ergibt.

Da jedoch nunmehr der Hub während der Überwindung des Lüftspieles von der Vorschalteinrichtung aufgebracht wird, das Zylinderlaufteil jedoch in dieser Phase stillsteht, wird der Hub des Zylinderlaufteiles nur noch ausschließlich zum Aufbau der Zuspannkraft benötigt. Daraus ergibt sich, dass der Gesamthub nur noch durch den Hub des Zylinderlaufteiles während des Aufbaues der Zuspannkraft bestimmt ist. Dieser Gesamthub ist jedoch trotz der erhöhten Anforderungen geringer als bei den bislang bekannten Betriebsbremsanlagen. Beim Entlüften bzw. beim Lösen der Bremse erfolgt der Bewegungsablauf in umgekehrter Reihenfolge als zuvor beschrieben.

Da durch die erfindungsgemäße Lösung eine äußerst kompakte Bauweise des Bremszylinders angestrebt wird, ist vorgesehen, dass die Vorschalteinrichtung in das Zylinderlaufteil integriert ist und dass die Vorschalteinrichtung einen druckbeaufschlagbaren Vorschaltkolben aufweist, an dem die Kolbenstange festgelegt ist. Da die beim Aufbau der Zuspannkraft von dem Bremszylinder aufzubringende Kraft wesentlich größer ist als beim Überwinden des Lüftspieles ist vorgesehen, dass die druckbeaufschlagbare Fläche des Zylinderlaufteiles wesentlich größer ist als die druckbeaufschlagbare Fläche der Vorschaltreinrichtung bzw. des Vorschaltkolbens.

Die Druckbeaufschlagung des Zylinderlaufteiles erfolgt zeitlich verzögert gegenüber der Druckbeaufschlagung der Vorschalteinrichtung. Sinngemäß wird eine Reihenschaltung erreicht.

Damit die Druckbeaufschlagung des Zylinderlaufteiles als fließend angesehen werden kann, ist vorgesehen, dass die Vorschalteinrichtung während der Überwindung des Lüftspieles die zugewandte Öffnung eines Überströmkanals zur Druckbeaufschlagung des Zylinderlaufteiles sperrt und dass nach Überwindung des Lüftspieles diese Öffnung frei ist. Dadurch kann das Fluid zur Druckbeaufschlagung des Zylinderlaufteiles ohne Umschaltvorgänge oder dergleichen zu der druckbeaufschlagbaren Fläche des Zylinderlaufteiles geleitet werden.

Eine konstruktiv einfache, jedoch funktionssichere Lösung wird erreicht, indem die Vorschalteinrichtung aus dem druckbeaufschlagbaren Kolben, einer den Kolben belastenden Vorspannfeder und einer Gewindespindel besteht, die in eine zentrale Gewindebohrung des Vorschaltkolbens eingedreht ist. Die Vorspannfeder stützt sich mit einem Ende an dem Kolben und mit dem gegenüberliegenden Ende an einem ringförmigen Ansatz der Kolbenstange ab. Sie ist so ausgelegt, dass bei der Bewegung des Kolbens zur Überwindung des Lüftspieles sie nicht oder nur unwesentlich zusammengedrückt wird, obwohl die Kolbenstange ausgefahren wird. Die Steigungen der Gewindegänge sind derart, dass die Gewindespindel nicht selbsthemmend ist, so dass beim Verfahren des Kolbens während der Überwindung des Lüftspieles die Gewindespindel in Drehung versetzbar ist. Dabei wirkt der sich nicht drehende Kolben als Antriebsmittel. Die Steigungen der Gewindegänge sind als Steilgewindegänge anzusehen. Die Gewindespindel ist an der der Kolbenstange abgewandten Seite mit einem konisch gestalteten Kopf versehen, der nach der Druckbeaufschlagung des Zylinderlaufteiles mit einer Gegenfläche des Zylinderlaufteiles in Reibkontakt steht. Nach der Druckbeaufschlagung des Zylinderlaufteiles bzw. nachdem die Bremsbeläge am Bremskörper anliegen wird sinngemäß schlagartig eine relativ hohe Gegenkraft für das Zylinderlaufteil aufgebaut. Dadurch wird die auf den Kolben der Vorschalteinrichtung wirkende Vorspannfeder zusammengedrückt, so dass der Kolben der Vorschalteinrichtung die Öffnung zum Überströmkanal freigibt, so dass das Zylinderlaufteil druckbeaufschlagt wird. Das Zylinderlaufteil übt jedoch auch eine Kraft auf die Gewindespindel auf, so dass der konisch gestaltete Kopf der Gewindespindel mit der Gegenfläche des Zylinderlaufteiles in Reibkontakt steht. Die Gewindespindel wirkt nunmehr selbsthemmend, so dass sie sich nicht mehr verdrehen kann. Dadurch kann die Kolbenstange des Bremszylinders mit der vom Zylinderlaufteil erzeugten, relativ sehr hohen Kraft ausfahren, so dass eine entsprechend hohe Zuspannkraft erzeugt wird.

Damit die Gewindespindel sich während des Verfahrens der Vorschalteinrichtung bzw. des Kolbens zur Überwindung des Lüftspieles drehen kann, ist vorgesehen, dass der der Kolbenstange abgewandte Endbereich der Gewindespindel in einem Axiallager gelagert ist.

Eine konstruktiv einfache Lösung für die Kontaktierung des konischen Kopfes mit der Gegenfläche des Zylinderlaufteiles wird erreicht, wenn der Durchmesser des konischen Kopfes sich zum zugehörigen Ende der Gewindespindel verkleinert. Die Gegenfläche ist dann entsprechend als Schrägfläche ausgebildet, so dass die Flächen in Reibkontakt kommen, wenn das Zylinderlaufteil unmittelbar nach der Druckbeaufschlagung verfahren wird.

Das Zylinderlaufteil ist in einer bevorzugten Ausführung als Ringkolben ausgebildet, der mit wenigstens einem Überströmkanal ausgestattet ist. Der Kolben könnte auch als Ringflansch bezeichnet werden, da er einen die Vorschalteinrichtung umhüllenden Ring und einen sich daran anschließenden Flansch aufweist, der druckbeaufschlagbar ist.

Damit die Abmessungen des Bremszylinders minimiert sind, ist vorgesehen, dass die Mittellängsachse der Vorschalteinrichtung bzw. des Vorschaltkolbens und des Zylinderlaufteils zusammenfallen.

Anhand der beiliegenden Zeichnungen wird die Erfindung noch näher erläutert. Es zeigen:

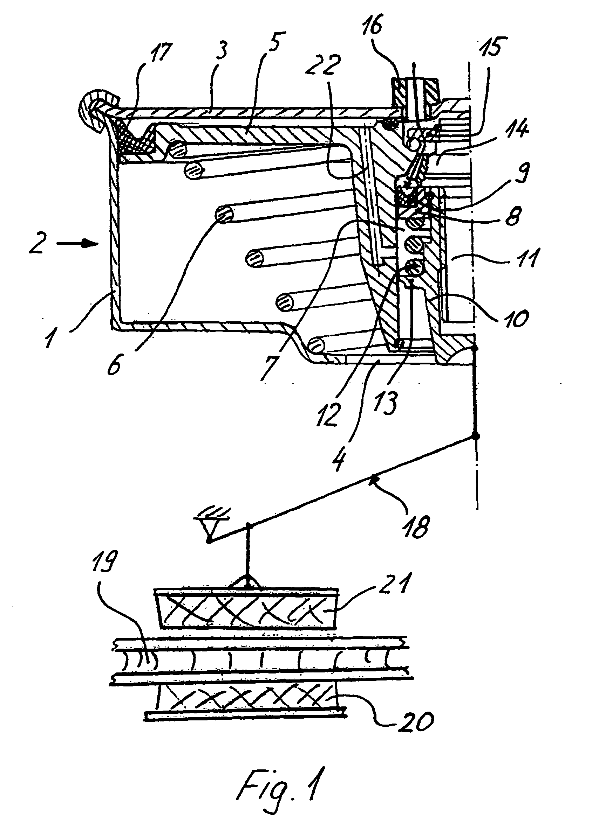

- Figuren 1 bis 4: einen erfindungsgemäßen Bremszylinder im Halbschnitt in vier verschiedenen Stellungen des Zylinderlaufteils und der Vorschalteinrichtung sowie mit einer andeutungsweise dargestellten Bremse.

Der in den Figuren 1 bis 4 dargestellte Bremszylinder 2 weist ein Gehäuse 1 auf, welches durch einen Deckel 3 verschlossen ist. Die dem Deckel 3 gegenüberliegende Gehäusewand ist mit einer kreisförmigen Öffnung 4 versehen, damit ein im Inneren des Gehäuses 1 angeordnetes Zylinderlaufteil in Form eines Ringkolbens 5 aus dem Gehäuse 1 herausgefahren werden kann. Der Ringkolben 5 wird mittels einer Rückstellfeder 6 in Richtung zum Deckel 3 bewegt. Der Ringkolben 5 ist mit einer durchgehenden kreisförmigen und zentrischen Öffnung 7 versehen, in die einen noch näher erläuterte Vorschalteinrichtung (8, 11, 12) eingesetzt ist. Diese Vorschalteinrichtung (8, 11, 12) besteht aus einem ringförmigen Vorschaltkolben 8, der im Querschnitt winkelförmig ausgebildet ist. Dieser Vorschaltkolben 8 ist gegenüber der angrenzenden Fläche des Ringkolben 5 durch einen Dichtring 9 abgedichtet. Innerhalb des Vorschaltkolbens 8 liegt die ein- und ausfahrbare Kolbenstange 10, die mit einer Gewindebohrung versehen ist und in die eine Gewindespindel 11 eingedreht ist, deren Steigungen so groß sind, dass der Vorschaltkolben 8 als Antriebselement wirkt, das heißt, die Gewindespindel 11 ist nicht selbsthemmend.

Wie die Figuren zeigen, ist die Bauhöhe der Kolbenstange 10 deutlich größer als die des Vorschaltkolbens 8. Der Vorschaltkolben 8 ist durch eine Vorspannfeder 12 belastet, die sich mit einem Ende an der dem Deckel 3 abgewandt liegenden Fläche des Vorschaltkolbens 8 und mit dem anderen Ende an einem äußeren Stützring 13 der Kolbenstange 10 abstützt. Die Gewindespindel 11 ist an dem der Kolbenstange 10 abgewandten Ende mit einem konisch gestalteten Kopf 14 ausgestattet, dessen Durchmesser sich zum freien Ende hin verkleinert. Der Endbereich der Gewindespindel 11 ist in einem Axiallager 15 gelagert. An der Außenseite des Deckels 3 ist noch ein Anschlussstutzen 16 angesetzt, um beispielsweise Druckluft oder Hydrauliköl zuzuführen.

Die äußere Fläche des Ringkolbens 5 ist gegenüber dem Gehäuse 1 durch eine Dichtung 17 abgedichtet. Wie die Figuren zeigen, ist die Rückstellfeder 6 als Konusfeder ausgebildet, so dass die Windungen auch ineinandergreifen können. Die Kolbenstange 10 ist durch ein schematisch dargestelltes Bremsgestänge 18 mit der andeutungsweise dargestellten Bremsvorrichtung gekoppelt. Im dargestellten Ausführungsbeispiel enthält diese Bremsvorrichtung einen Bremskörper in Form einer Bremsscheibe 19 und seitliche Bremsbeläge 20, 21.

Die Figur 1 zeigt den Bremszylinder 2 in der Ruhestellung. Der Ringkolben 5 und der Vorschaltkolben 8 sind eingefahren, das heißt, sie werden durch die Rückstellfeder 6 und die Vorspannfeder 12 in Richtung zum Deckel 3 gedrückt. Die Figur 1 zeigt deutlich, dass zwischen der Bremsscheibe 19 und den Bremsbelägen 20, 21 ein Lüftspiel von beispielsweise 1 mm vorhanden ist. Wird das Bremspedal des Nutzfahrzeuges betätigt, strömt durch den Anschlussstutzen 16 das Fluid, vorzugsweise Druckluft, in das Innere des Bremszylinders 2 und trifft auf den Vorschaltkolben 8. Die Vorspannfeder 12 ist so ausgelegt, dass sie nicht zusammengedrückt wird, so dass der Vorschaltkolben 8 einschließlich der Dichtung 9 ausgefahren werden. Die Gewindespindel 11 wird in Drehung versetzt.

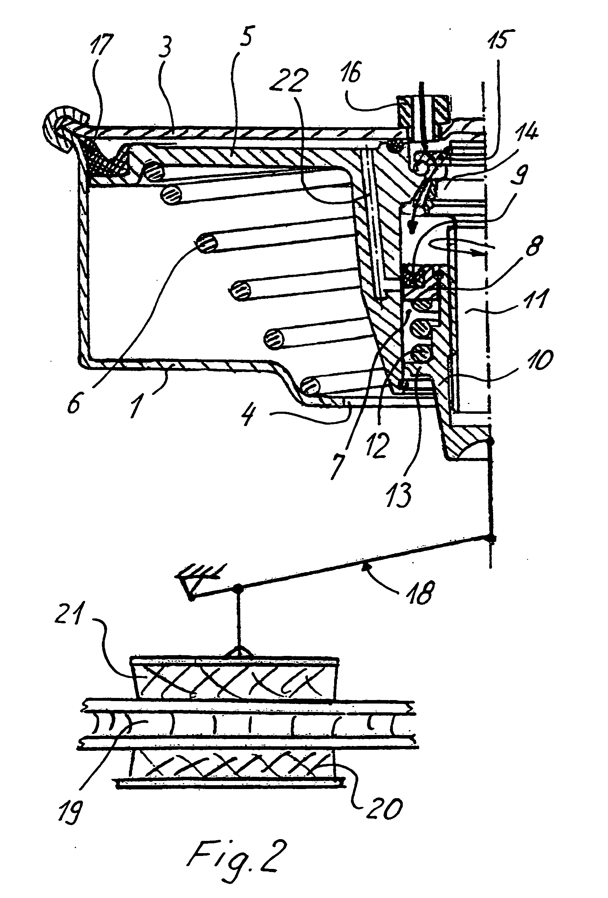

Wie die Figur 2 zeigt, wird in dieser Stellung die Öffnung 7 des Überströmkanals 22 verschlossen. Die Bremsbeläge 20, 21 kontaktieren die Bremsscheibe 19. Nun wird ein Gegendruck aufgebaut, der dazu führt, dass die Vorspannfeder 12 zusammengedrückt wird, wobei der Vorschaltkolben 8 jedoch noch weiter ausgefahren wird. Die Gewindespindel 11 wird weiterhin gedreht.

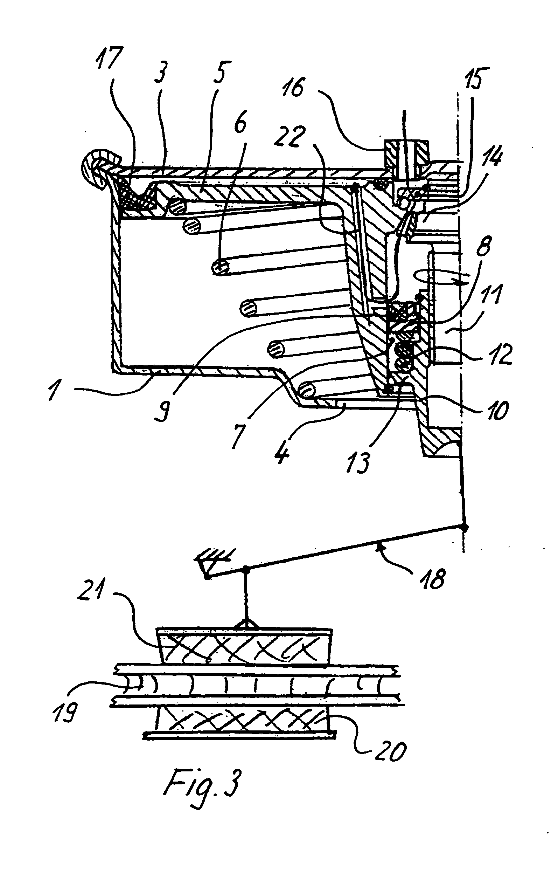

Wie die Figur 3 zeigt, wird die Öffnung 7 des Überströmkanals 22 freigegeben, so dass nunmehr das Fluid durch den Überströmkanal 22 hindurch in den Zwischenraum zwischen dem Deckel 3 und dem Ringkolben 5 strömt.

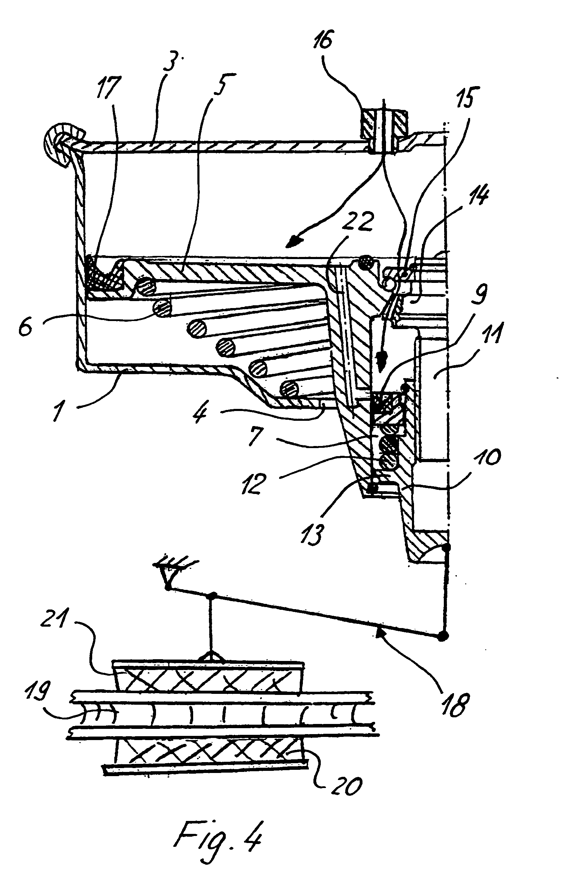

Wie die Figur 4 zeigt, kann nunmehr die Druckluft auch direkt den Ringkolben 5 beaufschlagen. Der kegelförmige Kopf 14 kommt in Kontakt mit der Gegenfläche des Ringkolbens 5, so dass die Gewindespindel 11 sich nunmehr nicht mehr dreht, sondern sie folgt der Bewegung des Ringkolbens 5. Durch die Verspannung der Träger für die Bremsbeläge 20, 21 und auch der Bremsscheibe 19 wird eine enorme Zuspannkraft aufgebaut.

Wenn der Bremsvorgang beendet ist, wird der Bremszylinder 2 entlüftet. Durch den Druckabbau fährt der Ringkolben 5 in seine Ausgangsstellung zurück. Bevor er diese gemäß der Figur 1 jedoch erreicht, wird die Selbsthemmung der Gewindespindel 11 aufgehoben, so dass sich der Vorschaltkolben 8 der Vorschalteinrichtung (8, 11, 12) durch die Drehung der Gewindespindel zurückbewegen kann und somit auch in seine Ausgangsstellung zurückfährt.

Die Erfindung ist nicht auf das dargestellte Ausführungsbeispiel beschränkt. Wesentlich ist, dass dem Ringkolben 5 als Hauptkolben des Bremszylinders 2 eine Vorschalteinrichtung (8, 11, 12) funktionell zugeordnet ist, die durch Druckbeaufschlagung bewirkt, dass die Kolbenstange 10 ausgefahren wird und somit das Lüftspiel überwunden wird, ohne dass der Ringkolben 5 als Hauptkolben betätigt wird.

### Bezugszeichen

- Gehäuse: 1
- Bremszylinder: 2
- Deckel: 3
- Öffnung: 4
- Ringkolben: 5
- Rückstellfeder: 6
- Öffnung: 7
- Vorschaltkolben: 8
- Dichtring: 9
- Kolbenstange: 10
- Gewindespindel: 11
- Vorspannfeder: 12
- Stützring: 13
- Kopf: 14
- Axiallager: 15
- Anschlussstutzen: 16
- Dichtung: 17
- Bremsgestänge: 18
- Bremsscheibe: 19
- Bremsbeläge: 20, 21
- Überströmkanal: 22

## Patentansprüche

1. Bremszylinder (2) für eine druckbeaufschlagbare Nutzfahrzeugbremse mit
a) einem druckbeaufschlagbaren sowie federbelasteten Zylinderlaufteil (5), wie zum Beispiel ein Kolben, eine randseitig eingespannte Membran oder dergleichen, wobei
b) der Bremszylinder (2) mit einer beweglichen und mit einem Bremsgestänge (18) koppelbaren Kolbenstange (10) ausgestattet ist,
**dadurch gekennzeichnet, dass**
c) dem Zylinderlaufteil (5) eine relativ dazu bewegliche Vorschalteinrichtung (8, 11, 12) derart zugeordnet ist, dass
d) diese bis zur Überwindung des Lüftspiels zwischen den Bremsbelägen (20, 21) und dem Bremskörper (19) durch Druckbeaufschlagung relativ zum Zylinderteil (5) bewegbar ist, und dass
e) nach Abbau des Lüftspiels das Zylinderlaufteil (5) druckbeaufschlagbar ist, so dass
f) beim Aufbau der Zuspannkraft die Vorschalteinrichtung (8, 11, 12) der Bewegung des Zylinderlaufteiles (5) folgt.

2. Bremszylinder nach Anspruch 1, **dadurch gekennzeichnet, dass** die Vorschalteinrichtung (8, 11, 12) in das Zylinderlaufteil (5) integriert und druckbeaufschlagbar ist und einen Vorschaltkolben (8) aufweist, an dem die Kolbenstange (10) festgelegt ist.

3. Bremszylinder nach Anspruch 1 oder 2, **dadurch gekennzeichnet, dass** die druckbeaufschlagbare Fläche des Zylinderlaufteiles (5) wesentlich größer ist als die druckbeaufschlagbare Fläche der Vorschalteinrichtung bzw. des Vorschaltkolbens (8).

4. Bremszylinder nach Anspruch 1, **dadurch gekennzeichnet, dass** die Vorschalteinrichtung (8, 11, 12) während der Überwindung des Lüftspieles die zugewandte Öffnung (7) von wenigstens einem Überströmkanal (22) zur Druckbeaufschlagung des Zylinderlaufteiles (5) sperrt, und dass nach Überwindung des Lüftspieles diese Öffnung (7) frei ist.

5. Bremszylinder nach Anspruch 1, **dadurch gekennzeichnet, dass** die Vorschalteinrichtung aus dem druckbeaufschlagbaren Vorschaltkolben (8) und einer den Vorschaltkolben (8) belastenden Vorspannfeder (12) und einer Gewindespindel (11) besteht, die in eine zentrische Gewindebohrung des Vorschaltkolbens (8) eingedreht ist.

6. Bremszylinder nach Anspruch 5, **dadurch gekennzeichnet, dass** die Steigungen der Gewindegänge der Gewindespindel (11) derart groß sind, dass die Gewindespindel (11) nicht selbsthemmend ist, so dass beim Verfahren des Vorschaltkolbens (8) während der Überwindung des Lüftspieles die Gewindespindel (11) in Drehung versetzbar ist.

7. Bremszylinder nach Anspruch 5 oder 6, **dadurch gekennzeichnet, dass** die Gewindespindel (11) an der der Kolbenstange (10) abgewandten Seite einen konisch gestalteten Kopf (14) aufweist, der nach der Druckbeaufschlagung des Zylinderlaufteiles (5) mit einer Gegenfläche des Zylinderlaufteiles (5) in Reibkontakt steht.

8. Bremszylinder nach Anspruch 7, **dadurch gekennzeichnet, dass** der der Kolbenstange (10) abgewandte Endbereich der Gewindespindel (11) in einem Axiallager (15) gelagert ist.

9. Bremszylinder nach Anspruch 7, **dadurch gekennzeichnet, dass** der Durchmesser des konischen Kopfes (14) sich zum zugehörigen Ende der Gewindespindel (11) verkleinert.

10. Bremszylinder nach einem oder mehreren der vorhergehenden Ansprüche 1 bis 9, **dadurch gekennzeichnet, dass** das Zylinderlaufteil als Ringkolben (5) ausgebildet ist, der mit wenigstens einem Überströmkanal (22) ausgestattet ist.

11. Bremszylinder nach einem oder mehreren der vorhergehenden Ansprüche 1 bis 10, **dadurch gekennzeichnet, dass** die Mittellängsachsen der Vorschalteinrichtung bzw. des Vorschaltkolbens (8) und des Zylinderlaufteiles (5) zusammenfallen.

## Claims

1. Brake cylinder (2) for a pressurisable commercial vehicle brake with
a) a pressurisable and spring-loaded cylinder moving part (5), as for example a piston, a membrane clamped at the edges or similar, wherein
b) the brake cylinder (2) is equipped with a movable piston rod (10) which may be coupled to a brake linkage (18),
**characterised in that**
c) the cylinder moving part (5) is assigned a pilot device (8,11,12) capable of moving relative to it in such a way that
d) the latter may be moved relative to the cylinder moving part (5) by the application of pressure until the clearance between the brake linings (20, 21) and the brake body (19) is overcome, and that
e) after reduction of the clearance, the cylinder moving part (5) may be subject to the application of pressure so that
f) with the build-up of the application force, the pilot device (8, 11, 12) follows the movement of the cylinder moving part (5).

2. Brake cylinder according to claim 1, **characterised in that** the pilot device (8, 11, 12) is integrated with the cylinder moving part (5) and is pressurisable and has a pilot piston (8) to which the piston rod (10) is attached.

3. Brake cylinder according to claim 1 or 2, **characterised in that** the pressurisable surface of the cylinder moving part (5) is significantly greater than the pressurisable surface of the pilot device or of the pilot piston (8).

4. Brake cylinder according to claim 1 **characterised in that** the pilot device (8, 11, 12), during the overcoming of the clearance, blocks the facing orifice (7) of at least one overflow passage (22) for the application of pressure to the cylinder moving part (5), and that this orifice (7) is open after the clearance has been overcome.

5. Brake cylinder according to claim 1, **characterised in that** the pilot device is comprised of the pressurisable pilot piston (8), and a bias spring (12) acting on the pilot piston (8), and a threaded spindle (11) which is screwed into a central tapped hole of the pilot piston (8).

6. Brake cylinder according to claim 5, **characterised in that** the pitches of the threads of the threaded spindle (11) are large enough for the threaded spindle (11) not to be self-locking, so that as the pilot piston (8) moves during the overcoming of the clearance, the threaded spindle (11) is made to rotate.

7. Brake cylinder according to claim 5 or 6, **characterised in that** the threaded spindle (11) has on the side facing away from the piston rod (10) a conical head (14) which, after the application of pressure to the cylinder moving part (5), makes frictional contact with a mating surface of the cylinder moving part (5).

8. Brake cylinder according to claim 7, **characterised in that** the end section of the threaded spindle (11) facing away from the piston rod (10) is mounted in an axial bearing (15).

9. Brake cylinder according to claim 7, **characterised in that** the diameter of the conical head (14) reduces towards the associated end of the threaded spindle (11).

10. Brake cylinder according to one or more of the preceding claims 1 to 9, **characterised in that** the cylinder moving part is in the form of an annular piston (5) equipped with at least one overflow passage (22).

11. Brake cylinder according to one or more of the preceding claims 1 to 10, **characterised in that** the centre longitudinal axes of the pilot device or pilot piston (8) and of the cylinder moving part (5) coincide.

## Revendications

1. Cylindre de frein (2) pour un frein de véhicule utilitaire apte à être commandé par pression, comprenant
a) un élément de cylindre glissant (5), apte à être soumis à pression et chargé par un ressort, comme un piston, un diaphragme serré du côté de son bord ou élément similaire,
b) au cylindre de frein (2) étant pourvu d'une tige de piston (10) mobile, apte à être accouplé à une timonerie de frein (18),
**caractérisé en ce**
c) **qu'**un dispositif amont (8, 11, 12) mobile relativement audit élément de cylindre glissant (5) est affecté au dernier d'une telle façon,
d) **que** ce dispositif est mobile relativement audit élément de cylindre (5) sous l'action de pression jusqu'à ce que le jeu de ventilation entre les garnitures de frein (20, 21) et le corps de frein (19) soit surmonté, et
e) **que** suivant la réduction du jeu de ventilation, ledit élément de cylindre glissant (5) est apte à être soumis à pression, d'une telle façon,
f) **qu'**au cours de l'établissement de la force d'application du frein, ledit dispositif amont (8, 11, 12) suit le mouvement dudit élément de cylindre glissant (5).

2. Cylindre de frein selon la revendication 1, **caractérisé en ce que** ledit dispositif amont (8, 11, 12) est intégré dans ledit élément de cylindre glissant (5) est apte à être soumis à pression, comprenant un piston amont auquel ladite tige de piston (10) est fixée.

3. Cylindre de frein selon la revendication 1 ou 2, **caractérisé en ce que** l'aire commandable par pression dudit élément de cylindre glissant (5) est essentiellement plus grande que l'aire commandable par pression dudit dispositif amont ou respectivement dudit piston amont (8).

4. Cylindre de frein selon la revendication 1, **caractérisé en ce que** ledit dispositif amont (8, 11, 12) bloque l'ouverture (7) en face d'au moins une conduite de trop-plein (22), au cours du franchissement du jeu de ventilation, pour la pressurisation dudit élément de cylindre glissant (5), et **en ce que** cette ouverture (7) est libre après le franchissement du jeu de ventilation.

5. Cylindre de frein la revendication 1, **caractérisé en ce que** ledit dispositif amont consiste en ledit piston amont (8) apte à être soumis à pression et en un ressort de précontrainte (12) agissant sur ledit piston amont (8) et en une broche filetée (11) vissé dans un alésage fileté central dudit piston amont (8).

6. Cylindre de frein selon la revendication 5, **caractérisé en ce que** les pas de ladite broche filetée (11) sont si grands que ladite broche filetée (11) n'est pas autobloquant d'une telle façon, qu'au cours du mouvement dudit piston amont (8), ladite broche filetée (11) est tournante pendant le franchissement du jeu de ventilation.

7. Cylindre de frein selon la revendications 5 ou 6, **caractérisé en ce que** ladite broche filetée (11) présente une tête (14) à configuration conique, de son côté opposé à ladite tige de piston (10), laquelle tête se trouve en contact à frottement contre une aire correspondante dudit élément de cylindre glissant (5) après la pressurisation dudit élément de cylindre glissant (5).

8. Cylindre de frein selon la revendication 7, **caractérisé en ce que** la zone terminale de ladite broche filetée (11), qui est opposée à ladite tige de piston (10), est logée dans un palier lisse de butée (15).

9. Cylindre de frein selon la revendication 7, **caractérisé en ce que** le diamètre de ladite tête conique (14) se réduit vers l'extrémité affectée de ladite broche filetée (11).

10. Cylindre de frein selon une ou plusieurs des revendications précédentes 1 à 9, **caractérisé en ce que** ledit élément de cylindre glissant est configuré sous forme d'un piston annulaire (5) pourvu d'au moins une conduite de trop-plein.

11. Cylindre de frein selon une ou plusieurs des revendications précédentes 1 à 10, **caractérisé en ce que** les axes longitudinaux médians dudit dispositif amont ou respectivement dudit piston amont (8) et dudit élément de cylindre glissant (5) se trouvent en coïncidence.
